# EUROPEAN PATENT SPECIFICATION

(11) **EP 2 786 896 B1**
(45) Date of publication and mention of the grant of the patent: **19.04.2017**
(21) Application number: 11876480.2
(22) Date of filing: 02.12.2011
(51) Int. Cl.: B60N 2/00, B60N 2/58, A47C 7/62

(54) **LOAD DETECTION DEVICE**
LASTERKENNUNGSVORRICHTUNG
DISPOSITIF DE DÉTECTION DE CHARGE

(43) Date of publication of application: 08.10.2014
(73) Proprietor: Aisin Seiki Kabushiki Kaisha, Aichi 448-8650 (JP)
(72) Inventor: YANAI, Keiichi, Kariya-shi, Aichi 448-8650 (JP); TAKUMA, Setsu, Kariya-shi, Aichi 448-8650 (JP); KITO, Kosuke, Kariya-shi, Aichi 448-8650 (JP)
(74) Representative: TBK
(86) International application number: PCT/JP2011/077909
(87) International publication number: WO 2013/080369

(56) References cited:
- EP-A1- 2 168 820
- FR-A1- 2 870 798
- JP-A- 2000 124 575
- JP-A- 2000 124 575
- JP-A- 2005 233 845
- JP-A- 2008 051 592
- JP-A- 2009 208 495
- JP-A- 2011 105 138
- JP-U- H02 137 061

## Description

### TECHNICAL FIELD

The present invention relates to a load detection device that is installed in a seat of a vehicle for detecting the seating state of an occupant.

### BACKGROUND ART

Heretofore, in order to improve the performances of various safety devices such as seat belts, air bags or the like equipped in vehicles, there is a technology that detects the seating state of an occupant on a vehicle seat to control these safety devices. Then, as load detection devices suitable for detecting such occupant's seating state, there are film-like membrane switches being thin and flexible.

In the prior art disclosed in Patent Document 1 for example, six sensitive sections 11a that constitute a membrane switch for detecting a load are arranged so as to be brought into contact with the buttocks of an occupant on a seating surface of a vehicle seat when the occupant is seated, that is, so as to suitably detect the load of the occupant's weight. Then, a connection section 11c is arranged forward from a sensing area surrounded by the six sensitive sections 11a and is connected to a wiring 12 at such a position as to be affected little by the occupant's weight. The wiring 12 is made to pass through a through hole that goes through a pad of the vehicle seat downward. Then, the wiring 12 is extended to a back side of the pad and is connected to a vehicle side connector under the vehicle seat to be electrically connected to a control section.

An other load detection device with the features of the preamble of claim 1 is disclosed in Patent Document 2.

### PRIOR ART DOCUMENT

### PATENT DOCUMENT

Patent Document 1: JP2002-65396 A
Patent Document 2: EP 2 168 820 A1

### SUMMARY OF THE INVENTION

### PROBLEM TO BE SOLVED BY THE INVENTION

In the seating sensor constructed like this, the connection section 11c is arranged between the sensing area receiving the occupant's weight and the wiring 12 hardly receiving the influence of the occupant's weight. Thus, the depression of the pad occurs at the sensing area but hardly takes place at the connection position to the wiring 12, and hence, a step is formed between the both places. This gives rise to an anxiety that the connection section 11c is deformed by the influence of the step, thereby affecting the accuracy of output values.

The present invention has been made taking the aforementioned problem into consideration, and an object thereof is to provide a load detection device capable of improving the accuracy in detecting a occupant's weight in a construction being simple and low in cost.

### MEASURES FOR SOLVING THE PROBLEM

In order to solve the aforementioned problem, the invention of a load detection device according to Claim 1 is a load detection device taking a film shape, which comprises a seat pad member and at least three detection sections contacting a seating side surface of the vehicle seat pad member for detecting a load on the pad member and a connection section connecting the detection sections; wherein the device comprises a tail section that is connected to the connection section within a sensing area surrounded by the at least three detection sections, that is bent downward within the sensing area to extend downward from a seating surface of the seat pad member, and that has at a lower end a lead portion for delivering load signals detected by the detection sections, wherein
the tail section is connected at the lead portion to a harness provided with a socket; and
the harness and the socket pass through the through hole that goes through a center portion of the seating surface of the vehicle seat pad member to a back side of the pad member, that the harness is wired at the back side of the vehicle seat pad member, and that the socket is connected to a vehicle side connector; and
a concave groove is formed to be depressed at a part on the seating side surface of the vehicle seat pad member transversely of the third connection section, that the through hole is formed at a bottom part of the concave groove, that a curved portion formed by curving at least a part of the third connection section is inserted into the concave groove, and that the tail section is bent to pass through the through hole.

The invention of the load detection device according to Claim 2 resides in that in Claim 1, the through hole is formed to make the bending angle of the tail section an obtuse angle when the tail section passes through the through hole.

The invention of the load detection device according to Claim 3 resides in that in Claim 1 or 2, an entrance part of the through hole on the seating surface side of the vehicle seat pad member is formed to be so closed that facing both lateral surfaces of the through hole come close.

The invention of the load detection device according to Claim 4 resides in that in Claim 1, round-shape cutouts are provided at a root portion of the tail section at which the tail section is connected to the connection section within the sensing area.

The invention of the load detection device according to Claim 5 resides in that in Claim 1 or 4, the load detection device taking the film shape includes four detection sections as the detection sections, that the connection section comprises a first connection section connecting two detection sections of the four detection sections, a second connection section connecting two remaining detection sections and a third connection section connecting the first connection section and the second connection section at respective center portions, and that the tail section is connected to a center portion of the third connection section.

The invention of the load detection device according to Claim 6 resides in that in Claim 5, round-shape cutouts are provided at root portions of the third connection section that connect the first connection section and the second connection section.

### EFFECTS OF THE INVENTION

According to the invention of Claim 1 constructed as described above, the load detection device has the tail section that is bent to be arranged downward within the sensing area surrounded by the at least three detection sections. Thus, when the occupant is seated within the sensing area on the seating surface of the pad member of the seat, the sensing area and the tail section residing in the sensing area are depressed by the same amount at the same time. Therefore, since any step caused by the pad depression is not produced at the portion arranged on the seating surface of the tail section, no deformation is made by the cause of the step, so that an anxiety does not arise in that the output values go down in accuracy. Further, since the tail section is bent within the sensing area to be arranged downward, the sensor can be downsized and reduced in cost.

While the tail section is connected at the lead portion to the harness provided with the socket, by changing the take-out direction of the harness, it is possible to freely set the position of the socket, so that adaptation can be made to vehicle seats of various models.

When the harness passes through the through hole of the vehicle seat pad member to be wired at the back side, and the socket is connected to the vehicle side connector it is not required to wire at the back side of the pad member after having the harness get around the rearward end of the pad member and then, to make connection to the vehicle side connector, the harness can be shortened and hence, can be reduced in cost.

With the curved portion formed by curving at least a part of the third connection section being inserted into the concave groove, and the tail section being bent to pass through the through hole formed at the bottom part of the concave groove, even in the load detection device which is configured to traverse the concave groove where the same is provided, the same effects as those in the case of not having the concave groove can be attained

According to the additional features of the invention as per Claim 2, the through hole is formed to make the bending angle of the tail section an obtuse angle when the tail section passes through the through hole. Thus, the fear to the breaking of wire at the bending portion can be decreased, and at the same time, the adjustment of the bending angle enables the lengths of the tail section and the harness to be adjusted for adaptation to various seats, so that it can be realized to modularize the load detection device.

According to the additional features of the invention as per Claim 3, the entrance part of the through hole on the seating surface side of the vehicle seat pad member is formed to be so closed that facing both lateral surfaces of the through hole come close. Thus, an anxiety does not arise in that the occupant, when seated, has an unpleasant feeling upon contact of his/her buttocks with the through hole.

According to the additional features of the invention as per Claim 4, the round-shape cutouts are provided at the root portion of the tail section at which the tail section is connected to the connection section within the sensing area. Thus, even where the bending position of the tail section is set close to the connection section, the tail section can be adequately bent without having wrinkles, twists or the like at the root portion, so that accurate outputs can be secured.

According to the additional features of the invention as per Claim 5, the load detection device comprises the four detection sections, and the first connection section connecting the two detection sections and the second connection section connecting the two remaining detection sections are connected to the third connection section at the respective center portions. Then, the tail section is connected to the center portion of the third connection section. By arranging the detection sections, the respective connection sections and the tail section like this, it can be easily realized to arrange the downward bending position of the tail section within the sensing area.

According to the additional features of the invention as per Claim 6, the round-shape cutouts are provided at the root portions of the third connection section that connect the first connection section and the second connection section. Thus, in the occurrence of the case that the incorporation into the vehicle seat is carried out with the third connection section bent in the vicinities of the root portions, the third connection section can be prevented from producing wrinkles, twists or the like at the root portions and hence, can be adequately bent to secure accurate outputs.

### BRIEF DESCRIPTION OF THE DRAWINGS

[Figure 1] is a perspective view showing the general construction or a vehicle seat and also showing the state that a load detection device according to the present invention is attached to the vehicle seat.
[Figure 2] is a top view of a cushion portion of the vehicle seat in a first embodiment not according to the present invention.
[Figure 3] is an enlarged sectional view of a part taken in Figure 2.
[Figure 4] is a sectional view taken along the line IV-IV (four places) in Figure 2.
[Figure 5] is a plan view of the load detection device (seating sensor) according to the present invention.
[Figure 6] is a sectional view taken along the line VI-VI in Figure 2.
[Figure 7] is a sectional view taken along the line VII-VII in Figure 2.
[Figure 8] is a sectional view of a through hole in a first modified form, corresponding to the sectional view taken along the line VII-VII in Figure 2.
[Figure 9] is a sectional view of a through hole in a second modified form, corresponding to the sectional view taken along the line VII-VII in Figure 2.
[Figure 10] is a top view of a cushion portion of a vehicle seat in the state of a skin being removed in a second embodiment according to the present invention.
[Figure 11] is a sectional view taken along the line XI-XI in Figure 10.
[Figure 12] is a view showing a concave groove in a modified form of the second embodiment.
[Figure 13] is a sectional view of a through hole in a third modified form, corresponding to a section position taken along the line VII-VII in Figure 2.

### FORMS FOR PRACTICING THE INVENTION

Hereinafter, with reference to the drawings, description will be made regarding a first embodiment in which a load detection device (hereafter, referred to as seating sensor) for a vehicle seat according to the present invention is applied to a vehicle seat 2. The directions indicating "forward-rearward, left-right and upper-lower" used throughout the present description will be used on the basis of those in the vehicle.

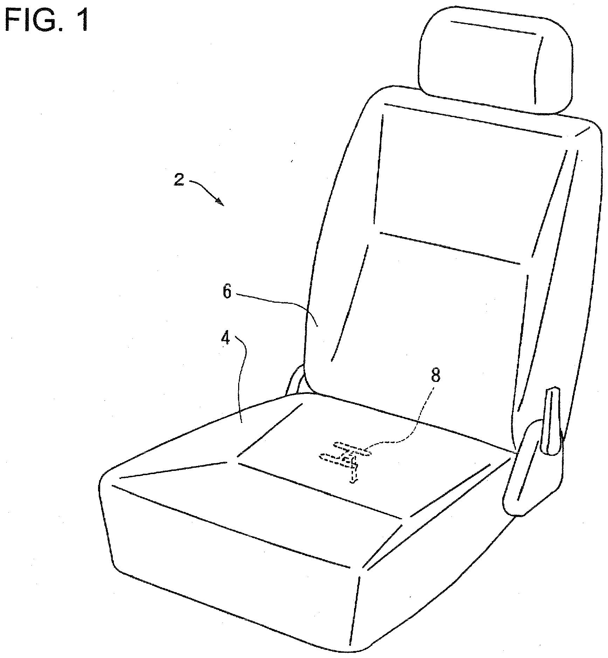

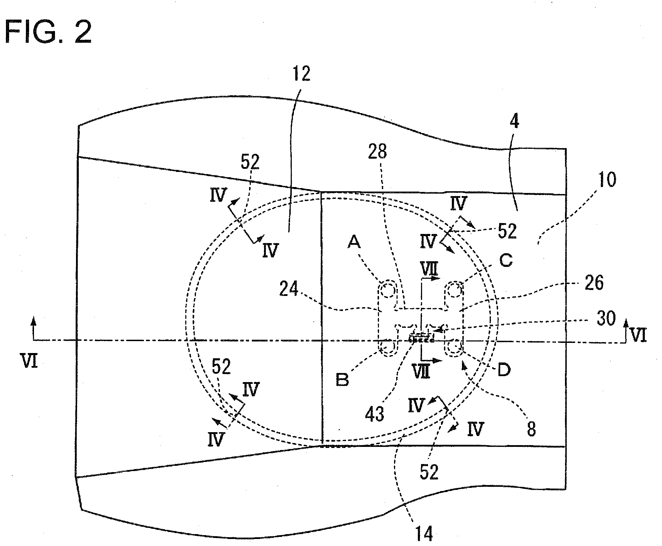

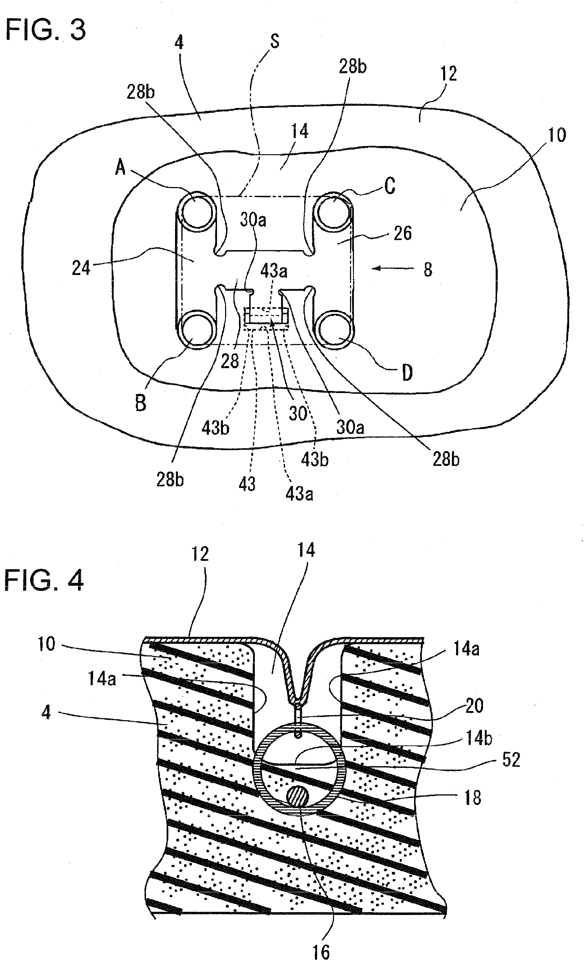

As shown in Figure 1, the vehicle seat 2 is provided with a cushion portion 4, a film-like seating sensor 8 and a seatback portion 6. As shown in Figures 2 and 3, the cushion portion 4 comprises a pad member 10 made of urethane foam or the like and a skin member 12 made of a fabric (vinyl leather, a leather or the like) which is attached to cover the upper surface being a seating side surface of the pad member 10. As shown in Figure 2, a concave groove 14 arranged elliptically is formed to be depressed on the upper surface of the pad member 10 of the cushion portion 4. The concave groove 14 has both sidewalls 14a, 14a and a bottom surface 14b (refer to Figure 4).

In the pad member 10 and under the bottom surface 14b of the concave groove 14, an anchor member 16 being a metal-made wire rod are embedded along the concave groove 14. However, the anchor member 16 may not be embedded along the concave groove 14 but may be embedded in the width direction (left-right direction) of the cushion portion 4 to intersect the concave groove 14 at a predetermine position.

Then, as shown in Figures 2 and 4, portions of the skin member 12 to which engaging members 20 are attached are inserted to predetermined positions (in the present embodiment, four places taken along the line IV-IV) in the concave groove 14 over the embedded anchor member 16, and the the engaging members 20 are coupled with the anchor member 16 through fastening rings 18 at an outcrop portion 52 as shown in Figure 4, whereby the skin member 12 is fixed on the surface of the pad member 10. Like this, the concave groove 14 is a groove (hanging groove) formed to hang the skin member 12. The fastening positions to the anchor member 16 shown in Figure 2 are one example, and the positions at which the fastenings are done are freely determined.

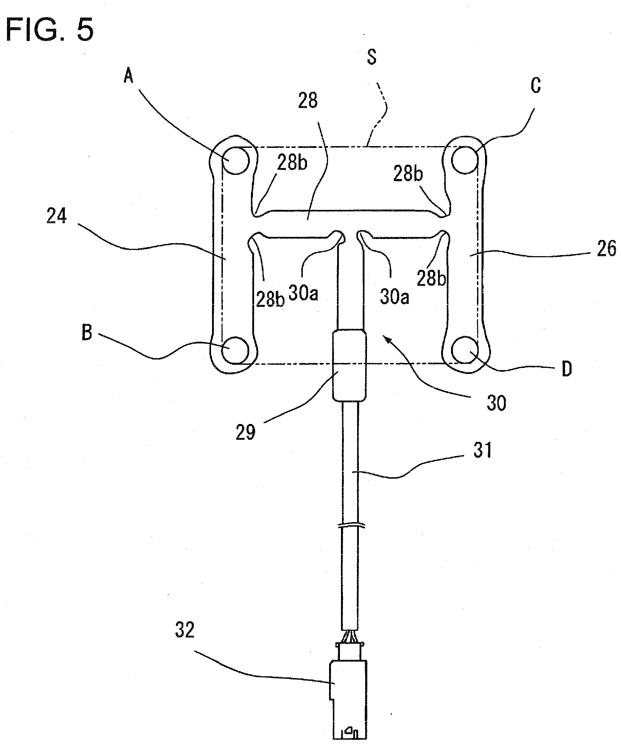

As shown in Figures 1 to 3, the seating sensor 8 (load detection device) is a membrane switch and is arranged between the pad member 10 and the skin member 12 covering the pad member 10. As shown in the plan view of Figure 5, the seating sensor 8 has contacts A to D being four detection sections for detecting the load onto the pad member 10 in contact with the seating side surface of the pad member 10 at their back sides, and the contacts A to D constitute a sensing area S (the portion encircled by the two-dot-chain line) surrounded thereby. Further, the seating sensor 8 has a first connection section 24 connecting two contacts A and B of the four contacts (detection sections), a second connection section 26 connecting the two remaining contacts C and D, and a third connection section 28 mutually connecting the center portions of the first and second connection sections 24, 26 at its opposite ends. Further, the seating sensor 8 has a tail section 30 connected to the center of the third connection section 28, bent downward within the sensing area S to extend downward from the seating surface of the pad member 10, and provided at a lower end with a lead portion 29 for delivering load signals detected by the contacts A to D (detection sections), and also has a harness 31 connected to the lead portion 29 and provided with a socket 32 at an end. Hereinafter, the side on which the seating sensor 8 contacts the seating side surface of the pad member 10 will be referred to as a back side, whereas the side on which the seating sensor 8 contacts the skin member 12 will be referred to as a front side.

As described above, the four contacts A to D as detection sections are arranged at respective predetermined positions in a rectangle to form the sensing area S. In this case, the arrangement location of the sensing area S on the seating surface of the cushion portion 4 corresponds to almost the center portion of the seating surface of the cushion portion 4 as shown in Figure 2 and is set to a position to which, when an occupant is seated, the load of the occupant's weight is applied in contact with the occupant's buttocks. Like this, the center portion of the seating surface means a center portion in an area to which, when the occupant is seated, the occupant's buttocks are brought into contact to apply the load.

Round-shape cutouts 30a, 30a are provided at a root portion of the tail section 30 where the same is connected to the center portion of the third connection section 28. Thus, even where the bending position of the tail section 30 is made to come close to the third connection section, the tail section 30 can be bent properly without having wrinkles, twists or the like at the root portion, so that accurate outputs can be secured. Further, four round-shape cutouts 28b are also provided at root portions of the third connection section 28 which mutually connect the respective center portions of the first and second connection sections 24, 26. The round-shape cutouts 30a, 30a and the four round-shape cutouts 28b need not necessarily be provided, in which case either or both of them may be omitted.

The harness 31 is electrically connected to the lead portion 29 of the tail section 30 and is provided with the socket 32 at its end. The lead portion 29 is a connection terminal that electrically connects the detection sections (contacts A to D) and the harness 31. The socket 32 is one for outputting the loads detected at the detection sections (contacts A to D) and constitutes output electrodes (not shown). The socket 32 is connected to a vehicle side connector (not shown) on the forward side in a space under the cushion portion 4. The connector is connected to an ECU (Electronic Control Unit, not shown) that judges the seating state of an occupant.

The seating sensor 8 is configured to take a film shape which is made by piling paired upper and lower films (both not shown) with an insulation spacer put therebetween. The upper and lower films are each a thin film made of a resin material such as, for example, polyethylene naphthalate (PEN) or the like and draw a contour covering the contacts A to D and the respective connection sections 24, 26, 28 and also covering the tail section 30 except for the lead portion 29. The insulation spacer is made of a resin such as, for example, polyethylene telephthalate (PET) or the like and has a contour that is almost in agreement with the contour of the upper and lower films and is provided with circular opening portions at the positions corresponding to the contacts.

Then, at each of the contacts A to D, an upper electrode (not shown) of a circular shape arranged on the upper film and a lower electrode (not shown) of a circular shape arranged on the lower film are provided to concentrically face each other with the opening portion therebetween. At each contact, when a load over a set value is applied in the thickness direction, the upper electrode and the lower electrode are brought into contact to be turned to ON, which makes electric current flow to result in the detection of a load over the set value. The electrodes at the respective contacts A to D are connected to the electrodes in the socket 32 through the respective connection sections 24, 26, 28, the tail section 30 and the harness 31. In the present embodiment, there is taken a construction in which the inputting of a load is detected when the contacts A and B are simultaneously turned to ON or when the contacts C and D are simultaneously turned to ON. Without being limited to this mode of operation, there may be taken another construction in which the inputting of a load is detected when the contacts A and D or the contacts B and C are simultaneously turned to ON or when each of the contacts A, B, C and D is turned to ON individuaiiy.

In order to secure the seating sensor 8 on the seating side surface of the pad member 10, the back side of the seating sensor 8 has a double-adhesive tape (not shown) put thereon or has a gluing agent (adhesive) applied thereto. In the present embodiment, the double-adhesive tape is not put on back sides of the contacts A to D and is put primarily on back sides of the respective connection sections 24, 26, 28. Thus, the respective connection sections 24, 26, 28 are reliably secured to the seating side surface of the pad member 10 by means of the adhesive action of the double-adhesive tape, whereby there is suppressed an unpleasant feeling at the time of the seating which is caused by the slippage between the seating sensor 8 and the pad member 10. Further, because no double-adhesive tape is provided at the tail section 30, it is possible for the tail section 30 to move (slide) in the vertical direction within a through hole 43 referred to later when the pad member 10 of the cushion portion 4 is depressed. Although, in the present embodiment, no double-adhesive tape is put on the back sides of the contacts A to D, double-adhesive tapes may be put on the back sides of the contacts A to D. Even in this case, the sensitivity in detecting the input loads at the contacts A to D can be ensured sufficiently.

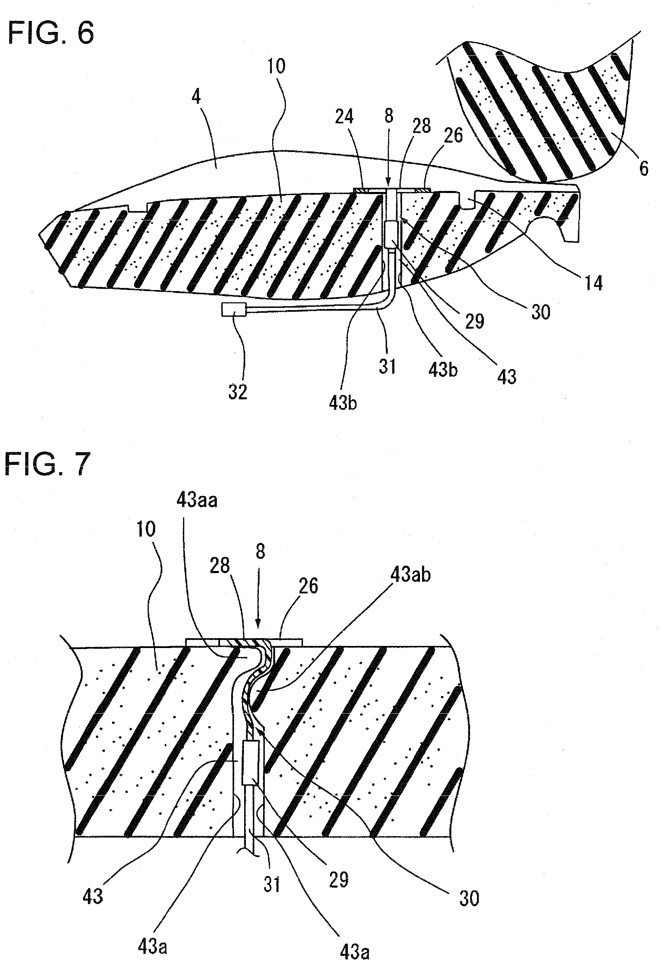

Next, the through hole 43 that is formed to go through from the seating surface to the back side of the pad member 10 will be described with reference to Figures 2 and 3 as well as to the VI-VI line sectional view in Figure 6. An explanatory note is taken in advance that the skin member 12 is not illustrated to be omitted in Figure 6 and Figures 7 to 13 referred to later. As shown in Figures 2 any 3, the through hole 43 is formed to nn through from the seating surface to the back side at almost the center portion of the seating surface of the pad member 10 and within the sensing area S for the seating sensor 8. The through hole 43 is a hole that enables the socket 32, the harness 31 and the tail section 30 (including the lead portion 29) go through the pad member 10 from the seating surface to the back side in arranging the seating sensor 8 on the seating surface of the pad member 10. Then, in the state of these members passing through, the lead portion 29 resides in the mid of the through hole 43, and the harness 31 is protruded from the back side of the pad member 10 to be subjected to wiring. Thus, at the back side of the pad member 10, the harness 31 can be freely wired and hence, can be desirably connected to a vehicle side connector which is provided in various fashions.

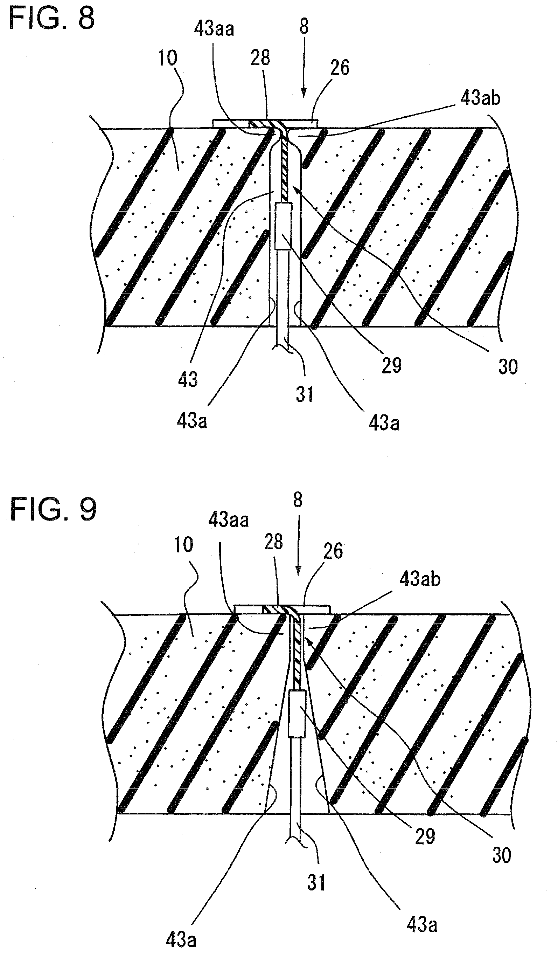

The through hole 43 is formed to take a rectangular shape as viewed from above that includes facing wall surfaces 43a, 43a (corresponding to both lateral surfaces in the present invention) and wall surfaces 43b, 43b orthogonal to the wall surfaces 43a, 43a. As shown in Figure 7, the wall surfaces 43a, 43a respectively have protruding portions 43aa, 43ab at upper portions thereof, and the protruding portions 43aa, 43ab come close to each other to cross, thereby closing an entrance part of the through hole 43. Then, the tail section 30 is inserted into a gap at the crossing portion. In inserting the tail section 30 including the socket 32, the harness 31 and the lead portion 20 to between the protruding portions 43aa and 43ab, the insertion is performed little by little as the socket 32 at the head is pushed into between the protruding portions 43aa and 43ab with the space between the same widened by hand. Thus, the through hole 43 does not display a big gap when viewed from above, so that the occupant does not experience an unpleasant feeling when seated. Although, in the present embodiment, the wall surfaces 43a, 43a of the through hole 43 take the section shapes shown in Figure 7, they are not limited to such section shapes. The section shapes may take the shapes shown in Figure 8 (first modification) or Figure 9 (second modification), by which shapes the facing wall surfaces 43a, 43a (both lateral surfaces) of the through hole 43 are made to come close to each other to close the entrance part of the through hole 43. The same effects can also be expected by the modified configurations.

Next, the operation of the seating sensor so attached will be described. When an occupant is seated on the upper surface of the pad member 10 through the skin member 12, depression occurs at the portion which is the center portion of the seating surface of the pad member 10 contacted by the occupant's buttocks and at which the seating sensor is arranged, so that the seating sensor 8 can properly acquire a load signal of the occupant's weight. At this time, the tail section 30 (including the socket 32 and the harness 31) of the seating sensor 8 has been bent at the center portion of the seating surface of the pad member 10 and within the sensing area S and remains inserted into the through hole 43 that is formed downward to go through the pad member 10 to the back side of the same. Thus, the tail section 30 (including the socket 32 and the harness 31) goes down within the sensing area S by the same amount as the respective contacts A to D (detection sections) and the respective connection sections 24, 26, 28 do. Therefore, any step due to a difference in depression does not take place between the sensing area S on the seating surface of the pad member 10 and the tail section 30. As a result, it does not occur that the seating sensor 8 suffers from deformation due to pulling, wrinkles, twists or the like caused by a step produced at any part thereof, and hence, the seating sensor 8 can precisely output detection signals of the respective contacts A to D (detection sections).

Further, when the occupant is seated on the seating surface of the vehicle seat 2, either the contacts A and B or the contacts C and D turn to ON to electrify a circuit constituted by the seating sensor 8, and a seating detection signal by this current flow enables the ECU to judge that somebody is seated on the seat cushion portion 4 (that there is a weight load exceeding a predetermined one). This makes an air bag device operable or a warning to be issued against the out-of-fastening of a seat belt.

As clear from the foregoing description, according to the first embodiment, the seating sensor 8 (load detection device) has the tail section 30 arranged to be bent downward within the sensing area S surrounded by the four detection sections A to D. Thus, when the occupant is seated on the seating surface of the pad member 10 of the vehicle seat 2, the sensing area S and the bent portion of the tail section 30 are depressed by almost the same amount at the same time. Thus, since any step due to the difference in depression of the pad member 10 do not occur between the sensing area S and the tail section 30, an anxiety does not arise in that the deformation of the tail section 30 brings about degradation in accuracy of output values. Further, the tail section 30 is arranged to be bent downward within the sensing area S, it is possible to downsize the seating sensor 8 (load detection device) and to shorten the length of the tail section 30, thereby resulting in a reduction in cost.

Further, according to the first embodiment, the round-shape cutouts 30a, 30a are provided at the root portion of the tail section 30 at which the same is connected to the third connection section within the sensing area S. Therefore, even where the bending position of the tail section 30 is made to come close to the third connection section 28 for the downsizing of the seating sensor 8, the tail section 30 can be properly bent without having wrinkles or twists at the root portion, so that it is possible to obtain accurate outputs.

Further, according to the first embodiment, the seating sensor 8 comprises the four detection sections, and the third connection section 28 is connected to the respective center portions of the first connection section 24 connecting the two detection sections A and B and the second connection section 26 connecting the two remaining detection sections C and D. Then, the tail section 30 is connected to the center portion of the third connection section 28. By arranging the detection sections A to D and the respective connection sections 24, 26, 28 in an H-shape fashion like this, it is possible to easily arrange the bent position downward of the tail section 30 within the sensing area S.

Further, according to the first embodiment, the tail section 30 is connected at the lead portion 29 to the harness 31 provided with the socket 32. Thus, since the wiring can be done by the use of the harness 31 on the back side of the pad member 10, the position of the socket 32 can be set as desired in dependence on the take-out direction of the harness 31, so that adaptation can be made to vehicle seats of various models.

Further, according to the first embodiment, the harness 31 is wired at the back side of the pad member 10 through the through hole 43, and the socket 32 is connected to a vehicle side connector (not shown). Thus, since the harness 31 is not required to be wired at the back side of the pad member 10 for connection to the vehicle side connector after getting around a rearward part of the pad member 20, the harness 31 can be shortened and hence, can be reduced in cost.

Further, according to the first embodiment, the entrance part of the through hole 43 on the seating surface side of the pad member 10 has both lateral surfaces 43a, 43a that are formed to come close to be closed. Thus, there is no anxiety that the occupant, when seated, does have an unpleasant feeling at his/her buttocks.

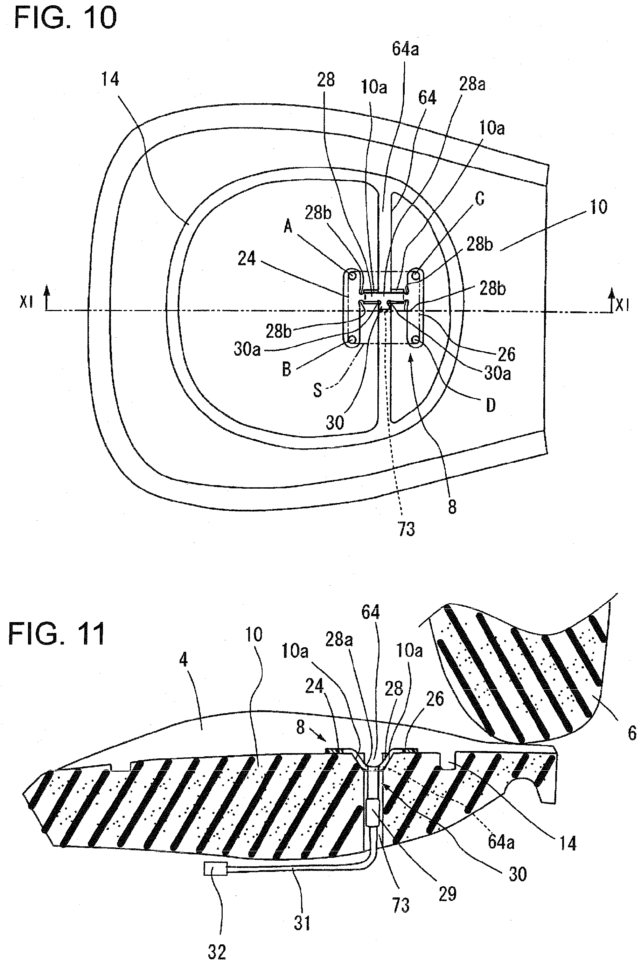

Next, a second embodiment will be described. In the second embodiment, as shown in Figure 10, the pad member 10 of the cushion portion 4 is formed at a part on the upper surface thereof with a concave groove 64 that is depressed and arranged in the width direction. The function of the concave groove 64 is the same as that of the concave groove 14 having been described in the first embodiment, and hence, the detailed description thereof will be omitted.

The concave groove 64 in the second embodiment is arranged so as to traverse the third connection section 28 of the seating sensor 8. The concave groove 64 is formed on the inner peripheral side of the concave groove 14 to traverse the concave groove 14 in the width direction of the pad member 10. Further, the concave groove 64 is arranged at almost the mid portion in the forward-rearward direction on the seating surface of the pad member 10, and the arrangement position is nearly in agreement with the position which the occupant's buttocks contact when the occupant is seated and hence, on which the occupant's weight acts. Since other respects are the same as those in the first embodiment, description will be omitted with respect to such other respects and will be made with respect to modified respects only. Further, the same components will be described with the same reference numerals designated thereto.

As shown in Figure 10, the seating sensor 8 is so arranged that the third connection section 28 traverses the concave groove 64 to extend in the forward-rearward direction. Further, as shown in the sectional view of Figure 11, a curved portion 28a that is configured by curving a part of the third connection section 28 is inserted to contact a bottom portion 64a of the concave groove 64. At this time, the pad member 10 is provided with taper portions 10a, 10a that guide the curved portion 28a to the bottom portion 64a. The position of the curved portion 28a in the lengthwise direction is adjusted so that the back side of the tail section 30 connected to the third connection section 28 is brought into contact with the bottom portion 64a of the concave groove 64 at the same time.

The seating sensor 8 is provided with the round-shape cutouts 28b at the root portions of four places where the third connection section 28 is connected to the first connection section 24 and the second connection section 26 (refer to Figures 5 and 10). Thus, when the curved portion 28a that is configured by bending and curving the vicinities of the root portions of the third connection section 28 is inserted into the concave groove 64, deformation caused by winkles, twists or the like does not arise at the root portions of the third connection section 28. This results in successful curving and hence, in obtaining accurate outputs.

In this case, at the center portion of the seating surface of the pad member 10 as viewed from above and within the sensing area S, as is done in the first embodiment, a through hole 73 is formed at the bottom portion 64a of the concave groove 64 and goes through the pad member 10 to the back side of the same (refer to Figure 11). Then, the tail section 30 (including the socket 32 and the harness 31) is inserted into the through hole 73. With this construction, when the occupant is seated on the seating surface of the seat cushion 4, the tail section 30 (including the socket 32 and the harness 31) goes down within the sensing area S by almost the same amount as those of the respective contacts A to D (detection sections) and the respective connection sections 24, 26, 28 though differing somewhat therefrom in down amount. Therefore, since no step is produced at the portion where the tail section 30 is arranged on the bottom portion 64a of the concave groove 64, no deformation occurs on the tail section 30, so that it is possible to precisely output the detection signals of the respective contacts A to D (detection sections).

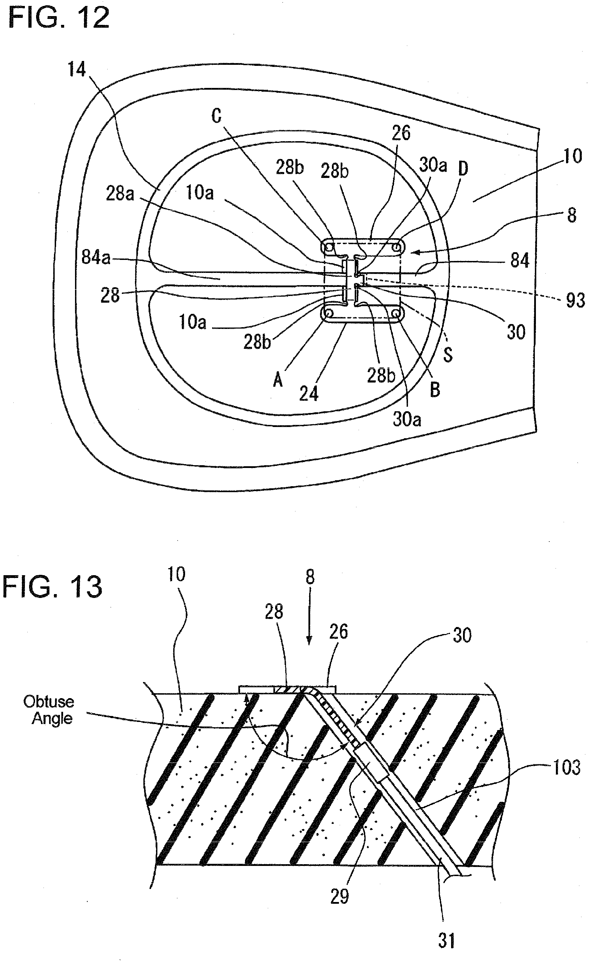

In the second embodiment, the concave groove 64 is arranged extending in the width direction of the pad member 10. However, without being limited to this arrangement, there may be arranged a concave groove 84 extending in the forward-rearward direction, as shown in Figure 12. Also in this case, the seating sensor 8 is so arranged that the third connection section 28 traverses the concave groove 84. At the center portion of the seating surface of the pad member 10 as viewed from above and within the sensing area S, as is done in the second embodiment, a through hole 93 is formed at a bottom portion 84a of the concave groove 84 and goes through the pad member 10 to the back side of the same. Then, the tail section 30 (including the socket 32 and the harness 31) is inserted into the through hole 93. The same effects as above can be expected with this construction.

As clear from the foregoing description, in the second embodiment, the seating sensor 8 is arranged to have the third connection section 28 traversing the concave groove 64, 84, and the curved portion 28a that is configured by curving a part of the third connection section 28 is inserted into the concave groove 64, 84. Further, the tail section 30 is also inserted into the concave groove 64, 84 and is made to pass through the through hole 73, 93 formed at the bottom portion 64a, 84a of the concave groove 64, 84. The same effects as those in the first embodiment can be expected also in the seating sensor 8 constructed like this.

In the first and second embodiments, the through hole 43, 73, 93 is formed to be almost orthogonal to the seating surface. However, without being limited to this form, a through hole 103 may be provided so that, as shown as a third modified form in Figure 13, the tail section 30 in the state of passing through the through hole makes the bending angle of the tail section 30 an obtuse angle (refer to Figure 13). This can reduce the possibility for the tail section 30 to be subjected to the breaking of wire at the bent portion. Further, by taking the construction that the bending angle of the tail section 30 becomes an obtuse angle, it is possible to adjust the length from the tail section 30 to the socket 32. Because this enables adjustment to be made to the length suitable for a vehicle side connector that may be arranged at various positions, adaptation can be made to vehicle seats of various models, so that the seating sensor can be modularized.

Further, although the seating sensor 8 (seating detection device) in the first and second embodiments is configured to arrange the four contacts A to D as the detection sections in the form of a rectangular shape, the seating sensor is not limited to such configuration. For example, there may be taken a construction that three contacts A to C as detection sections are arranged in a triangle shape and are connected through connection sections wherein the tail section is connected at a point residing within the sensing area S. Further, there may be arranged five or more detection sections. Also in this case, it is suitable to connect the tail section to a connection section at a point arranged within the sensing area S. The same effects can also be expected in these modifications.

### INDUSTRIAL APPLICABILITY

A seating sensor according to the present invention is suitable for use in detecting occupant's seating on a cushion portion of a vehicle seat.

### DESCRIPTION OF SYMBOLS

2 ...vehicle seat, 4...cushion portion, 6...seatback, 8...load detection device (seating sensor), 10...pad member, 12...skin member, 14, 64, 84...concave groove, 14a, 64a...bottom portion, 24...first connection section, 26...second connection section, 28...third connection section, 28a...curved portion, 29...lead portion, 30...tail section, 31...harness, 32...socket, 43, 73, 93, 103..through hole, Ato D...detection sections (contacts), S...sensing area

## Claims

1. A load detection device taking a film shape, comprising:
a seat pad member (10) and
at least three detection sections (A to D) contacting a seating side surface of the vehicle seat pad member (10) for detecting a load on the pad member (10);
a connection section (24, 26, 28) connecting the detection sections (A to D); and
a tail section (30) connected to the connection section (24, 26, 28) within a sensing area (S) surrounded by the at least three detection sections (A to D), bent downward within the sensing area (S), passing through a through hole (43, 73, 93, 103) that is provided to go through the pad member (10) from the seating side surface to a back side within the sensing area (S) to be wired to the back side of the pad member (10), and having at a lower end a lead portion (29) for delivering load signals detected by the detection sections (A to D), wherein
the tail section (30) is connected at the lead portion (29) to a harness (31) provided with a socket (32); and
the harness (31) and the socket (32) pass through the through hole (43, 73, 93, 103) that goes through a center portion of the seating surface of the vehicle seat pad member (10) to the back side of the pad member (10); the harness (31) is wired at the back side of the vehicle seat pad member (10); and the socket (32) is connected to a vehicle side connector
**characterized in that**
a concave groove (64) is formed to be depressed at a part on the seating side surface of the vehicle seat pad member (10) transversely of the connection section (28), and the through hole (73) is formed at a bottom portion (64a) of the concave groove (64); and
a curved portion (28a) that is formed by curving at least a part of the connection section (28) is inserted into the concave groove (64), and the tail section (30) is bent to pass through the through hole (73).

2. The load detection device in Claim 1, wherein:
the through hole (103) is formed to make the bending angle of the tail section (30) an obtuse angle when the tail section (30) passes through the through hole (103).

3. The load detection device in Claim 1 or 2, wherein:
an entrance part of the through hole (43) on the seating surface side of the vehicle seat pad member (10) is formed to be so closed that facing both lateral surfaces (43aa, 43ab) of the through hole (43) come close.

4. The load detection device in Claim 1, wherein:
round-shape cutouts (30a, 30a) are provided at a root portion of the tail section (30) at which the tail section (30) is connected to the connection section (24, 26, 28) within the sensing area (S).

5. The load detection device in Claim 1 or 4, wherein:
the load detection device taking the film shape includes four detection sections (A to D) as the detection sections;
the connection section (24, 26, 28) comprises:
a first connection section (24) connecting two detection sections (A, B) of the four detection sections (A to D) and a second connection section (26) connecting two remaining detection sections (C, D);
a third connection section (28) connecting the first connection section (24) and the second connection section (26) at respective center portions; and
the tail section (30) is connected to a center portion of the third connection section (28).

6. The load detection device in Claim 5, wherein:
round-shape cutouts (28b, 28b, 28b, 28b) are provided at root portions of the third connection section (28) that connect the first connection section (24) and the second connection section (26).

## Patentansprüche

1. Lasterfassungsvorrichtung, die eine Folienform einnimmt, mit:
einem Sitzpolsterbauteil (10) und mindestens drei Erfassungsbereichen (A bis D), die eine sitzseitige Fläche des Fahrzeugsitzpolsterbauteils (10) zum Erfassen einer Last auf dem Polsterbauteil (10) berühren;
einem Verbindungsbereich (24, 26, 28), der die Erfassungsbereiche (A bis D) verbindet; und
einem Schwanzbereich (30), der mit dem Verbindungsbereich (24, 26, 28) innerhalb eines Abtastgebiets (S), das durch die mindestens drei Erfassungsbereiche (A bis D) umgeben ist, verbunden ist, innerhalb des Abtastgebiets (S) nach unten gebogen ist, durch ein Durchgangsloch (43, 73, 93, 103) hindurchgeht, das vorgesehen ist, um durch das Polsterbauteil (10) von der sitzseitigen Fläche zu einer Rückseite innerhalb des Abtastgebiets (S) zu laufen, um mit der Rückseite des Polsterbauteils (10) verdrahtet zu sein, und einen Anschlussabschnitt (29) an einem unteren Ende zum Liefern von Lastsignalen hat, die durch die Erfassungsbereiche (A bis D) erfasst werden, wobei
der Schwanzbereich (30) an dem Anschlussabschnitt (29) mit einem Kabelbaum (31) verbunden ist, der mit einer Anschlussbuchse (32) versehen ist; und
der Kabelbaum (31) und die Anschlussbuchse (32) durch das Durchgangsloch (43, 73, 93, 103) hindurchgehen, das durch einen Mittenabschnitt der Sitzfläche des Fahrzeugsitzpolsterbauteils (10) zu der Rückseite des Polsterbauteils (10) läuft; der Kabelbaum (31) an der Rückseite des Fahrzeugsitzpolsterbauteils (10) verdrahtet ist; und die Anschlussbuchse (32) mit einem fahrzeugseitigen Stecker verbunden ist
**dadurch gekennzeichnet, dass**
eine konkave Nut (64) ausgebildet ist, um an einem Teil an der sitzseitigen Fläche des Fahrzeugsitzpolsterbauteils (10) quer zu dem Verbindungsbereich (28) vertieft zu sein, und das Durchgangsloch (73) an einem Bodenabschnitt (64a) der konkaven Nut (64) ausgebildet ist; und
ein gekrümmter Abschnitt (28a), der durch Krümmen von mindestens einem Teil des Verbindungsbereichs (28) ausgebildet ist, in die konkave Nut (64) eingesetzt ist, und der Schwanzbereich (30) gebogen ist, um durch das Durchgangsloch (73) hindurchzugehen.

2. Lasterfassungsvorrichtung gemäß Anspruch 1, wobei:
das Durchgangsloch (103) so ausgebildet ist, dass der Biegewinkel des Schwanzbereichs (30) ein stumpfer Winkel ist, wenn der Schwanzbereich (30) durch das Durchgangsloch (103) hindurch geht.

3. Lasterfassungsvorrichtung gemäß Anspruch 1 oder 2, wobei:
ein Eingangsteil des Durchgangslochs (43) an der Sitzflächenseite des Fahrzeugsitzpolsterbauteils (10) ausgebildet ist, um derart geschlossen zu sein, dass sich beide zugewandte Seitenflächen (43aa, 43ab) des Durchgangsloch (43) annähern.

4. Lasterfassungsvorrichtung gemäß Anspruch 1, wobei:
kreisförmige Ausschnitte (30a, 30a) an einem Fußabschnitt des Schwanzbereichs (30) vorgesehen sind, an dem der Schwanzbereich (30) mit dem Verbindungsbereich (24, 26, 28) innerhalb des Abtastgebiets (S) verbunden ist.

5. Lasterfassungsvorrichtung gemäß Anspruch 1 oder 4, wobei:
die Lasterfassungsvorrichtung, die die Folienform einnimmt, vier Erfassungsbereiche (A bis D) als die Erfassungsbereiche enthält;
der Verbindungsbereich (24, 26, 28) Folgendes aufweist:
einen ersten Verbindungsbereich (24), der zwei Erfassungsbereiche (A, B) der vier Erfassungsbereiche (A bis D) verbindet, und einem zweiten Verbindungsbereich (26), der zwei verbleibende Erfassungsbereiche (C, D) verbindet;
einen dritten Verbindungsbereich (28), der den ersten Verbindungsbereich (24) und den zweiten Verbindungsbereich (26) an jeweiligen Mittenabschnitten verbindet; und
der Schwanzbereich (30) mit einem Mittenabschnitt des dritten Verbindungsbereichs (28) verbunden ist.

6. Lasterfassungsvorrichtung gemäß Anspruch 5, wobei:
kreisförmige Ausschnitte (28b, 28b, 28b, 28b) an Fußabschnitten des dritten Verbindungsbereichs (28) vorgesehen sind, der den ersten Verbindungsbereich (24) und den zweiten Verbindungsbereich (26) verbindet.

## Revendications

1. Dispositif de détection de charge prenant la forme d'un film, comprenant :
un élément de coussin de siège (10), et
au moins trois sections de détection (A à D) en contact avec une surface latérale de siège de l'élément de coussin de siège (10) du véhicule pour détecter une charge sur l'élément de coussin (10) ;
une section de raccordement (24, 26, 28) raccordant les sections de détection (A à D) ; et
une section de queue (30) raccordée à la section de raccordement (24, 26, 28) à l'intérieur d'une zone de détection (S) entourée par les au moins trois sections de détection (A à D), pliées vers le bas dans la zone de détection (S), passant par un trou débouchant (43, 73, 93, 103) qui est prévu pour traverser l'élément de coussin (10) de la surface latérale de siège jusqu'à un côté arrière à l'intérieur de la zone de détection (S) destinée à être câblée au côté arrière de l'élément de coussin (10), et ayant au niveau d'une extrémité inférieure, une partie de tête (29) pour délivrer des signaux de charge détectés par les sections de détection (A à D), dans lequel
la section de queue (30) est raccordée au niveau de la partie de tête (29), à un faisceau (31) prévu avec une douille (32) ; et
le faisceau (31) et la douille (32) passent à travers le trou débouchant (43, 73, 93, 103) qui traverse une partie centrale de la surface de siège de l'élément de coussin de siège (10) de véhicule jusqu'au côté arrière de l'élément de coussin (10) ; le faisceau (31) est câblé au niveau du côté arrière de l'élément de coussin de siège (10) de véhicule ; et la douille (32) est raccordée à un connecteur latéral de véhicule,
**caractérisé en ce que**
une rainure concave (64) est formée pour être enfoncée au niveau d'une partie sur la surface latérale de siège de l'élément de coussin de siège (10) de véhicule transversalement par rapport à la section de raccordement (28), et le trou débouchant (73) est formé au niveau d'une partie inférieure (64a) de la rainure concave (64) ; et
une partie incurvée (28a) qui est formée en incurvant au moins une partie de la section de raccordement (28) est insérée dans la rainure concave (64), et la section de queue (30) est pliée pour passer à travers le trou débouchant (73).

2. Dispositif de détection de charge selon la revendication 1, dans lequel :
le trou débouchant (103) est formé pour que l'angle de pliage de la section de queue (30) soit un angle obtus lorsque la section de queue (30) passe à travers le trou débouchant (103).

3. Dispositif de détection de charge selon la revendication 1 ou 2, dans lequel :
une partie d'entrée du trou débouchant (43) du côté de la surface de siège de l'élément de coussin de siège (10) de véhicule est formée pour être fermée de sorte que les deux surfaces latérales en vis-à-vis (43aa, 43ab) du trou débouchant (43) se ferment.

4. Dispositif de détection de charge selon la revendication 1, dans lequel :
des découpes de forme ronde (30a, 30a) sont prévues au niveau d'une partie d'emplanture de la section de queue (30) au niveau de laquelle la section de queue (30) est raccordée à la section de raccordement (24, 26, 28) à l'intérieur de la zone de détection (S).

5. Dispositif de détection de charge selon la revendication 1 ou 4, dans lequel :
le dispositif de détection de charge prenant la forme d'un film comprend quatre sections de détection (A à D) en tant que sections de détection ;
la section de raccordement (24, 26, 28) comprend :
une première section de raccordement (24) raccordant deux sections de détection (A, B) des quatre sections de détection (A à D) et une deuxième section de raccordement (26) raccordant deux sections de détection (C, D) résiduelles ;
une troisième section de raccordement (28) raccordant la première section de raccordement (24) et la deuxième section de raccordement (26) au niveau des parties centrales respectives ; et
la section de queue (30) est raccordée à une partie centrale de la troisième partie de raccordement (28).

6. Dispositif de détection de charge selon la revendication 5, dans lequel :
des découpes de forme ronde (28b, 28b, 28b, 28b) sont prévues au niveau des parties d'emplanture de la troisième section de raccordement (28) qui raccordent la première section de raccordement (24) et la deuxième section de raccordement (26).
